# EUROPEAN PATENT SPECIFICATION

(11) **EP 2 384 285 B1**
(45) Date of publication and mention of the grant of the patent: **23.07.2014**
(21) Application number: 09835401.2
(22) Date of filing: 06.03.2009
(51) Int. Cl.: B60C 15/06, B60C 9/11, B60C 15/00, B60C 1/00, B60C 9/12, B60C 9/14, B60C 17/00

(54) **TIRE SIDEWALL SHEAR DECOUPLING LAYER**
SEITENWANDSCHERUNGSENTKOPPLUNGSSCHICHT EINES REIFENS
COUCHE DE DÉCOUPLAGE DE CISAILLEMENT DE FLANC DE PNEUMATIQUE

(30) Priority: 22.12.2008 WO PCT/US2008/008790
(43) Date of publication of application: 09.11.2011
(73) Proprietor: Compagnie Générale des Etablissements Michelin, 63000 Clermont-Ferrand (FR); MICHELIN Recherche et Technique S.A., 1763 Granges-Paccot (CH)
(72) Inventor: KAPLAN, Benjamin, I., Greenville, SC 29605 (US); HOSDEZ, Fanny, F-63100 Clermont-Ferrand (FR); RIGO, Sebastien, F-63410 Manzat (FR)
(74) Representative: Dossmann, Gérard
(86) International application number: PCT/US2009/036310
(87) International publication number: WO 2010/074769

(56) References cited:
- EP-A1- 1 795 375
- WO-A1-2007/048683
- FR-A1- 2 901 177
- FR-A1- 2 901 178
- US-A- 5 036 551
- US-A1- 2004 187 996
- US-A1- 2008 149 249
- US-B2- 6 959 534

## Description

### BACKGROUND OF THE INVENTION

### Field of the Invention

This invention relates generally to tire sidewall architecture and more specifically, to a shear decoupling layer in the sidewall for minimizing tire damage from pinch shock, and in particular to a tire according to the preamble of claim 1, such as it is known from EP 1 795 375 A1.

### Description of the Related Art

As used here, pinch shock describes a tire condition that can result when the tread section of the tire is impacted in a manner that causes the shoulder section of the tire to contact or nearly contact the bead section of the tire. In such condition, the sidewall of the tire buckles or folds over itself as the shoulder section makes or nearly makes contact with the bead section. During such pinching, the rubber mix and carcass layer of the tire composite structure are compressed between the rim and an obstacle or other feature in the travel path of the tire. Since the rubber-based materials used in the tire are virtually incompressible, the rubber expands in directions largely perpendicular to the forces causing the pinch. Such expansion is known as the Poisson effect. The rubber expansion is transferred as a displacement to the carcass layer cords and under certain conditions, such as a severe impact, the carcass layer cords may undergo a deformation beyond their rupture strength causing the cords to sever.

It has been observed that such damage from pinch shock often results in the carcass layer cords being severed in two different places - - either within the shoulder section of the tire, within the bead section of the tire or both. Such severing of the cords is undesirable because the cords contribute to the structural integrity of the tire. Depending on the number of cords that are broken, the tire may show a deformation or a cut or if the damage is severe enough, a tire deflation.

In general, poor road conditions or other factors causing severe impact on the tread section of the tire can be responsible for pinch shock. For example, unpaved or poorly paved roads may have a variety of holes or other sudden changes in elevation that can lead to pinch shock. Similarly, roads containing debris or other obstructions can cause pinch shock as the tire encounters such obstacles in the road. Accordingly, for road surfaces where conditions leading to severe pinching of the tire are anticipated or expected, a tire more resistant to the breaking of radial plies is desirable.

FR 2 901 178 A1: discloses a tire comprising at least one reinforcing structure of the carcass type anchored on each side of the tire in a bead, said anchor comprising a reversal of said reinforcement structure of carcass type around a bead core so to form a turnup portion terminating in a free end, said tire further comprising at least one bielastic reinforcing element being constituted by a circumferential bielastic fabric wherein said fabric used is a bielastic knitted fabric or a stitched fabric, the loops forming the stitches are likely to move relative to each other in the knitting direction and in the direction perpendicular to the knitting, said at least one bielastic reinforcing element being arranged so as to extend along the end of the turnup of the carcass reinforcing structure type cross section area.

FR 2 901 177 A1: discloses a tire comprising at least one reinforcing structure of the carcass type anchored on each side of the tire, said anchor comprising a reversal of said reinforcement structure of carcass type around a bead core to form a turnup portion, said tire further comprising at least one bielastic reinforcing element being constituted by a circumferential bielastic fabric wherein said fabric used is a bielastic knitted fabric, or a stitched fabric, the loops forming the stitches are likely to move relative to each other, said at least one bielastic reinforcing element being arranged to extend substantially parallel along a portion of the reinforcing structure in the region of the bead of the tire, axially outwardly to the reinforcing structure, in the immediate vicinity thereof.

WO 2007/048683 A1: concerns a tyre comprising at least one, preferably at least two, carcass type reinforcing structures, one inner and the other outer, optionally one or more crown reinforcing structures, at least one circumferential bielastic reinforcing element consisting of a bielastic fabric, said fabric used being a bielastic knitted fabric, or a mesh fabric the loops of which forming the meshes are capable of being moved relative to one another in the knitting direction and in the direction perpendicular to the knitting, said bielastic reinforcement being designed to extend substantially parallel along a portion of a reinforcing structure.

### SUMMARY OF THE INVENTION

In order to overcome the above-mentioned problems, the present invention provides a tire according to independent claim 1. The dependent claims relate to advantageous embodimets.

Particular embodiments of the present invention include pneumatic tires having increased resistance to damage from pinch shock, such embodiments having one or more shear layers in the shoulder section and in the bead section of the tire. Particular embodiments include a pneumatic tire having a pair of shoulder section shear layers, one of the pair located at each sidewall respectively and each positioned on at least one axial side of the carcass layer, the shoulder section shear layers extending from the sidewall towards the crown. Such tire may further include a pair of bead section shear layers, one of the pair located at each sidewall respectively and each positioned on at least one axial side of the carcass layer, the bead section shear layers extending from the sidewall towards the bead core.

Particular embodiments may include the shoulder section shear layers extending from the sidewall to a position radially-inward of the crown ply by a predetermined distance d from an axial edge of the crown ply and/or the bead section shear layers extending from the sidewall to a position located at a predetermined distance h from the center of the bead core in a direction perpendicular to an axial direction of the tire. The distance d may, for example, be at least 10 mm and the height h may, for example, be no more than 15 mm.

Particular embodiments may include bead section shear layers that extends towards the sidewall to a point that is, for example, at least 30 mm from the center of the bead core and/or include shoulder section shear layers that extend from the axial edge of the crown ply towards the bead section for a distance that is, for example, at least 20 mm.

The foregoing and other objects, features and advantages of the invention will be apparent from the following more detailed descriptions of particular embodiments of the invention, as illustrated in the accompanying drawing wherein like reference numbers represent like parts of the invention.

### BRIEF DESCRIPTION OF THE DRAWINGS

FIG. 1 is a partial sectional view of an exemplary embodiment of a pneumatic tire in accordance with the present invention.
FIG. 2 is a partial sectional view of the tire shown in FIG. 1 undergoing pinching.

### DETAILED DESCRIPTION OF PARTICULAR EMBODIMENTS

Particular embodiments of the present invention include pneumatic tires having increased resistance to damage from pinch shock. Various embodiments include shear layers provided at various locations in the sidewall of the tire to provide resistance to pinch shock damage. Such pinch shock damage may include, for example, breakage of one or more cords in the carcass layer. More specifically, for such embodiments, shear layers are provided in the shoulder sections and in the bead sections of the tire in locations such that when the tire is in a pinch shocked condition, the shoulder section shear layers and the bead section shear layers in the pinch shocked region of the tire are opposite to one another across the tire interior.

As used herein, pinch shock describes a tire condition that can result when the tread section of the tire is impacted in a manner that causes the shoulder section of the tire to contact or nearly contact the bead section of the tire. The pinch shocked region of a tire that is undergoing pinch shock is therefore that section of a tire where the shoulder section of the tire contacts or nearly contacts the bead section of the tire.

It is thought that the shear layers act as shear decoupling layers to minimize the damage that may occur from a tire in a pinch shocked condition. Since the cords of the carcass layer and the rubber surrounding the cords (the elastomeric matrix) have different moduli of elongation, when the tire undergoes extreme deformation as in pinch shock there is a shear developed at the interface between the cords and the rubber next to cords, *i.e.,* the rubber encasing the cords in the carcass layer. It is thought that placing the shear layer on at least one side of the carcass layer limits the shear in the interface by decoupling it. With the shear decoupled, damage to the cords from pinch shock is minimized.

The shear layers that provide increased resistance to pinch shock tire damage are positioned on at least one axial side of the carcass layer 1) in the shoulder area of each side of the tire and 2) in the bead area of each side of the tire. More specifically, particular embodiments may include shear layers that are located on the axially-inward side of the carcass layer, on the axially-outward side of the carcass layer or on both sides of the carcass layer. For those embodiments that include placement of the shear layer on only one side of the carcass layer, the placement of the shoulder section shear layers and the bead section shear layers may be on the same side of the carcass layer, e.g., both the shoulder and bead section shear layers are located on the axially-inward side of the carcass layer, or on opposite sides of the carcass layer. In particular embodiments, one or more of the shear layers may be separated from the surface of the carcass layer by no more than 5 mm or alternatively, no more than 3 mm or no more than 1 mm. More specifically, in these embodiments an intervening layer of material may be included between the side of the carcass layer and the shear layer that is positioned adjacent to, but not on, the side of the carcass layer.

It should also be noted that in particular embodiments, one of the sections of shear layers may have shear layers on both sides of the carcass layer while the other section of shear layers may have a shear layer on only one side of the carcass layer. For example, the bead section shear layers may include bead shear layers on both sides of the carcass layer while the shoulder section shear layers may include one shoulder shear layer on only one side of the carcass layer.

The shear layers can be quite thin with some embodiments having a shear layer thickness, for example, of between 0.2 mm and 2 mm while other embodiments may have a shear layer thickness of between 0.3 mm and 1.5 mm, between 0.3 mm and 1 mm, between 0.3 mm and 0.7 mm or between 0.4 mm and 0.7 mm. The shear layers may be positioned against the carcass layer, for example, by laying the shear layer in as a sheet during the tire build process or by extrusion during the tire build process or by co-extrusion with the carcass layer, all methods which are well known to one having ordinary skill in the art. The thickness of shear layers in particular embodiments having shear layers constituted of elastomeric fabric or polyurethane based materials may range between 0.05 mm and 3 mm or alternatively any of the thicknesses listed above or between 0.1 mm and 3 mm, between 0.5 and 3 mm, between 0.5 and 2 mm or between 0.5 mm and 1 mm. In particular embodiments having shear layers constituted of polyurethane type elastic materials, the thickness may be quite thin - even less than 50 microns - when the material is sprayed or brushed on.

It may be noted that while in some embodiments the shear layers may all have the same thickness, there is no requirement for that to be the case. One or more of the shear layers may have a different thickness than the other shear layers. Furthermore, one or more of the shear layers may have a differing thickness over the length of the shear layer.

It should be noted that while the invention describes the shear layers as being shoulder section shear layers and bead section shear layers, such description only teaches that the shear layers be placed on and/or adjacent to the carcass layer at least in the shoulder areas and in the bead areas of a tire. Particular embodiments may include, for example, providing a continuous shear layer on one or more sides of the carcass layer from one bead area, through the crown area and all the way to the other bead area. Other embodiments may include, for example, extending the bead shear layer from the bead section to the shoulder shear layer, thereby providing a continuous shear layer from the start of the bead shear layer through the end of the shoulder shear layer within or near the crown.

As noted above, particular embodiments of the present invention position the shoulder section shear layers and the bead section shear layers in predetermined locations and with predetermined lengths to ensure that the shoulder section shear layers and the bead section shear layers in the pinch shocked region of the tire are opposite to one another across the tire interior.

In particular embodiments, the shoulder section shear layers may all have the same length and the bead section shear layers may all have the same length. However, in other embodiments the lengths of the shoulder section shear layer may differ by starting at different locations and/or ending at different locations along the length of the carcass layer and likewise, the lengths of the bead section shear layers may differ by starting at different locations and/or ending at different locations along the length of the carcass layer.

A fabric comprising elastomer fibers is a fabric woven with an elastomeric fiber and with a natural and/or manmade fiber. An example of such a fabric is one made with spandex, which in Europe and other parts of the world is commonly referred to as elastane. Spandex is a well known material and is generally defined as a synthetic elastomeric fiber having a very high elasticity to break point (up to approximately 500% to 600%) and a high recovery from stretching. Though the chemistry is very complex, basically spandex is a series of elastomeric products including hard and soft segments and cross linking between the same. The fibers produced are generally stronger and lighter than rubber. The properties of spandex include high stretch, low set (the ability to spring back to its original shape concluded after repeated stretching), high durability, uniformity and versatility.

Fabrics having spandex fibers generally are woven with other additional manmade or natural fibers such as cotton, wool, silk, linen, nylon, rayon and so forth. Swimwear is an example of well known products made with elastomer fibers, often made with nylon and spandex. The nylon/spandex combination is often woven in a tricot construction and typically includes 80% nylon and 20% spandex, such as LYCRA (a registered trademark of DuPont Corporation). This fabric is commonly used for its four-way stretchability, *i.e.* the ability to stretch in both the length and width directions of the fabric. Another well known fabric weave is the raschel-type construction, often having a higher nylon content (about 85% nylon and about 15% spandex). The stretch of the fabric having a raschel-type construction is typically significantly greater in one direction than the stretch in the other.

Without limiting the invention, particular embodiments of the present invention include one or more shear layers constituted from fabric comprising the nylon/spandex combination woven in the tricot construction. Other embodiments may include the combination woven in the raschel-type construction. Both constructions are well known in the textile industry.

Polyurethane type elastomer materials are also suitable for use as one or more of the shear layers for particular embodiments of the present invention. Suitable polyurethane type elastomer materials include polyurethanes, polyureas and polyurethaneureas having an MA10 of between 1 MPa and 350 MPa or alternatively between 5 MPa and 280 MPa, between 30 MPa and 250 MPa, between 40 MPa and 230 MPa or between 50 MPa and 190 MPa. In particular embodiments using liquid polyurethane type elastomer materials, the shear layers may be brushed, sprayed or extruded on during the tire construction process.

Reference will now be made in detail to embodiments of the present invention, one or more examples of which are illustrated in the figures. Each example is provided by way of explanation of the invention and is not meant to be delimitative of the invention in any way. It should be noted that for purposes of discussion, only half of the exemplary tire embodiments are depicted in the figures. One of ordinary skill in the art, using the teachings disclosed herein, will understand that the same or substantially similar features are repeated on both sides of the tire.

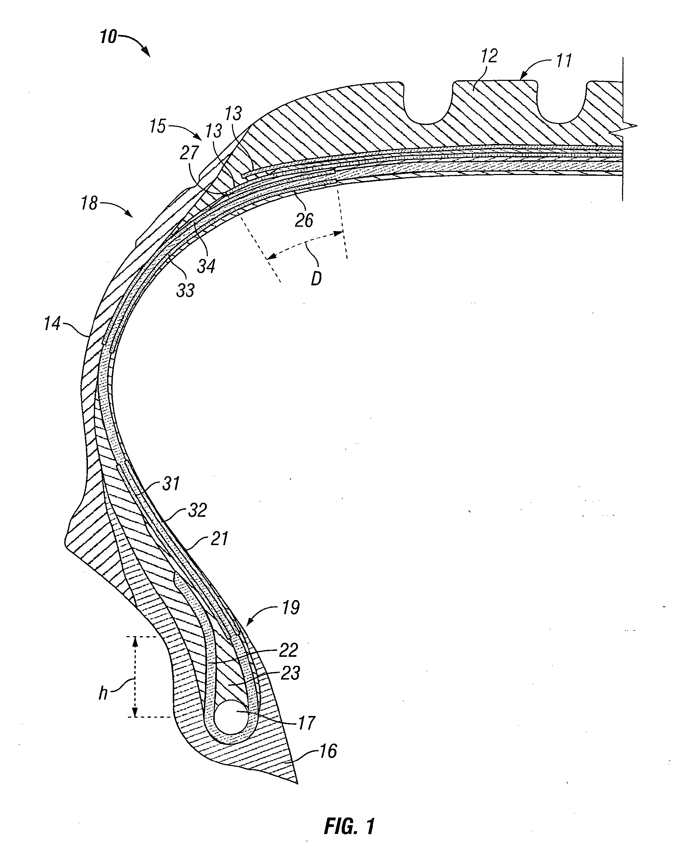

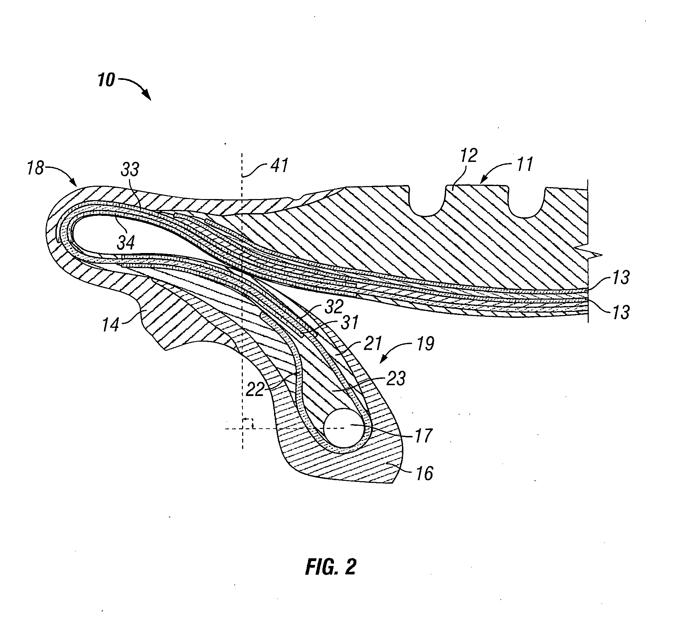

Referring now to FIG. **1**, a pneumatic radial tire **10** is provided having features, as will now be further described, for providing increased resistance to pinch shock under certain adverse travel conditions as discussed above. The tire **10** has a tread **11** for contacting the road surface. The tread **11** is supported by a crown **12** that is positioned radially-inward of the tread **11**, the crown **12** having a belt package or crown plies **13** to stiffen the casing and provide improved wear and handling response. The sidewall **14** extends in a direction radially-inward from an axial edge **15** of the crown **12**. The shoulder section **18** of the tire **10** is formed in the upper portion of the sidewall **14**. A tire bead **16** is located radially-inward of the sidewall **14** and includes a circumferentially-inextensible bead core **17**. The bead section **19** of the tire is formed in the lower portion of the sidewall **14**. Although depicted as a single element, the bead core **17** may typically include a bundle of metallic strands oriented circumferentially through the bead **16**. The tire **10** further may include an inner liner **26**, which forms an inner surface of the tire and inhibits the passage of the inflating gas through the tire **10**. One of ordinary skill in the art will understand, using the teaching disclosed herein, that the present invention is not limited to the precise shape of bead **16**, the tread **11**, the sidewall **14** or the tire **10** as depicted in the attached FIGS. **1** and **2**. Other embodiments for mounting a tire on a variety of differently sized and shaped rims fall within the scope of the present invention.

A pneumatic tire **10** further includes a carcass layer **21**. The carcass layer **21** extends between the beads **16** of the tire **10** and terminates in a pair of carcass layer ends **22**. Each carcass layer end **22** is formed by wrapping the carcass layer **21** around one of the bead cores **17** and then terminating the carcass layer **21** after extending it for a predetermined distance in a radially-outward direction along the sidewall **14**. The carcass layer **21** extends through the crown **12** at a position that is radially-inward of the belt package 13. A bead filler **23**, made of a harder rubber composition, is positioned radially-outward of each bead **16** and separates the carcass layer **21** from the carcass layer ends **22**. As known to one having ordinary skill in the art, the arrangement and size of the bead filler **23** and the carcass layer ends **22** are predetermined by the design criteria of the tire and any suitable geometry of these components fall within the scope of the present invention.

Typically, the carcass layer **21** is constructed from a plurality of mutually parallel textile cords embedded in an elastomeric matrix, such as a thin layer of a rubber composition. As known to one having ordinary skill in the art, the carcass layer **21** is typically formed using a calendering process wherein the cords are laid parallel to each other and encased in the elastomeric matrix. The cords may be made from materials such as, for example, polyester, nylon, aramid, rayon or a combination of these textile materials. The carcass layer **21** is then arranged in a manner such that the cords are typically oriented in a radial direction along the sidewalls **14** of tire **10**. More specifically, along the sidewalls **14** of the tire **10**, the cords of carcass layer **22** are substantially perpendicular to the axis of rotation of tire **10**.

Additionally the tire **10** is provided with shoulder section **18** shear layers **33**, **34** and bead section **19** shear layers **31**, **32**. The shoulder section shear layers of this exemplary embodiment include one shoulder shear layer **34** that is positioned on the axially-outward side of the carcass layer **21** and one shoulder shear layer **33** that is positioned on the axially-inward side of the carcass layer **21**. Likewise, the bead section shear layers include one bead shear layer **31** that is positioned on the axially-outward side of the carcass layer **21** and one bead shear layer **32** that is positioned on the axially-inward side of the carcass layer **21**.

The shoulder section shear layers **33**, **34** extend from the sidewall **14** to a position radially-inward of the belt package **13**. In particular embodiments the shoulder section shear layers extend a predetermined distance d towards the crown **12** and past the axial edge **27** of the radially-inward belt **13**. In particular embodiments the predetermined distance d is at least 10 mm but could be longer or shorter depending upon other considerations such as, for example, the process of manufacture or tire performance considerations other than pinch shock. In particular embodiments the shoulder shear layers extend from the axial edge **27** of the belt **13** towards the bead section **19** for a predetermined distance that is at least 20 mm. However, such distances are not provided to be delimitative of the invention.

The bead section shear layers **31, 32** extend from the sidewall **14** to a position within the bead section **19**. In particular embodiments the bead section shear layers **31, 32** extend from the sidewall to a position located at a predetermined distance h from the center of the bead core **17** in a direction perpendicular to an axial direction of the tire **10**. In particular embodiments the predetermined distance h is 15 mm or less but could be longer or shorter depending upon other considerations such as, for example, the process of manufacture or tire performance considerations other than pinch shock. In particular embodiments the bead shear layers **31**, **32** extend towards the sidewall to a point that is at least 30 mm or more from the center of the bead core **17**. However, such distances are not provided to be delimitative of the invention.

FIG. **2** is a partial sectional view of the tire shown in FIG. **1** undergoing pinch shock. The pinch shocked region of a tire **10** is that section of a tire where the shoulder section **18** of the tire contacts or nearly contacts the bead section **19** of the tire **10**. The shoulder section shear bands **33**, **34** and the bead section shear bands **31**, **32** are opposite to one another across the tire interior in accordance with particular embodiments of the present invention. Thus, a line **41** drawn perpendicularly from a line passing through the center of the bead core **17** in an axial direction passing through the pinch shocked region will pass through at least one of the bead section shear bands and at least one of the shoulder section shear bands when the shear bands are opposite to one another across the tire interior.

The invention is further illustrated by the following example, which is to be regarded only as illustration and not delimitative of the invention in any way. The properties of the compositions disclosed in the examples were evaluated as described below.

### Example 1

This example demonstrates that a shear layer constituted of an elastomeric fabric placed between the carcass layer and the material surrounding the carcass layer in accordance with the present invention improves resistance to tire damage caused by pinch shock.

Samples for testing were prepared and tested by a test method that included testing on a dynamic impact machine. The machine consisted of a carriage supporting an indenter slideably mounted between two vertical parallel rails. The carriage was released at differed heights above the sample placed on a steel plate interdependent of a force sensor. The measurements collected included the speed of the indenter at impact with the sample, the displacement in the thickness of the sample and the force of impact. The resultant energy at impact was calculated.

**Table 1 - Pinch Shock Test Results, Spandex Shear Layer**

| | Energy (J) | | | |
|---|---|---|---|---|
| | 48 J | 66 J | 75 J | 85 J |
| Witness, % Damaged Cords | 35 | 70 | 72 | 72 |
| Spandex Shear Layer, % Damaged Cords | 0 | 42 | 58 | 58 |

As seen in the test results shown in Table 1, the number of cords damaged during the test was significantly less in the sample having the spandex shear layers. The shear layers were spandex fabric having the tricot construction, the fabric being about 0.2 mm thick and being 82 % nylon and 18 % LYCRA. This fabric, typically used for swimwear, was obtained from Milliken & Company.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention. The foregoing description is provided for the purpose of illustration only and should not be construed in a limiting sense. Only the language of the following claims should limit the scope of this invention.

## Claims

1. A pneumatic tire (10), comprising:
a tread (11) supported by a crown (12), the crown (12) being positioned radially-inward of the tread (11);
a pair of sidewalls (14), each sidewall (14) extending radially-inward from an axial edge of the crown (12), each sidewall (14) defining a side of the tire (10);
a pair of beads (16), each bead (16) having a circumferentially-inextensible bead core (17) defining a bead core center, each bead (16) positioned radially-inward of each sidewall (14) respectively;
a carcass layer (21) constructed from a plurality of radially-oriented carcass layer cords embedded in an elastomeric matrix and extending through the crown (12) and between the beads (16), the carcass layer (21) having a pair of carcass layer ends (22), each end being anchored in each bead (16) respectively;
one or more crown plies disposed radially-inward of the tread and radially-outward of the carcass layer (21) and extending between the sidewalls of the tire (10);
a pair of shoulder section shear layers (33, 34), one of the pair located at each sidewall (14) respectively and each positioned on at least one axial side of the carcass layer (21), the shoulder section shear layers (33) extending from the sidewall (14) towards the crown (12);
a pair of bead section shear layers (31, 32), one of the pair located at each sidewall (14) respectively and each positioned on at least one axial side of the carcass layer (21), the bead section shear layers (31, 33) extending from the sidewall (14) towards the bead core (17);
**characterized in that** one or more of the pairs of shoulder section (18) and bead section (19) shear layers are constituted of an elastomeric fabric having elastomeric fibers woven in the fabric, and
wherein the shoulder section shear layers (33, 34) and the bead section shear layers (31, 32) in a pinch shocked region of the tire are opposite to one another across an interior of the tire, the pinch shock region being the section of the tire where the shoulder section of the tire contacts or nearly contacts the bead section of the tire (10).

2. The pneumatic tire (10) of claim 1, wherein the elastomeric fibers are spandex.

3. The pneumatic tire (10) of claim 1, wherein the elastomeric fabric comprises spandex fibers woven with nylon fibers in a tricot construction.

4. The pneumatic tire (10) of claim 3, wherein fabric comprises between 18 % and 25 % spandex fibers, the remaining being nylon fibers.

5. The pneumatic tire (10) of claim 1, wherein the shoulder section shear layers (33, 34) extend from the sidewall (14) to a position radially-inward of the crown ply by a predetermined distance d from an axial edge of the crown ply.

6. The pneumatic tire (10) of claim 5, wherein the distance d is at least 5 mm.

7. The pneumatic tire (10) of claim 1, wherein the bead section shear layers (31, 32) extend to a position located at a predetermined distance h from the center of the bead core (17) in a direction perpendicular to an axial direction of the tire (10).

8. The pneumatic tire (10) of claim 7, wherein the height h is no more than 10 mm.

9. The pneumatic tire (10) of claim 1, wherein each one of the pair of shoulder section shear layers (33, 34) has one shoulder shear layer positioned on an axially-inward side of the carcass layer (21).

10. The pneumatic tire (10) of claim 1, wherein each one of the pair of shoulder section shear layers (33, 34) have two shoulder shear layers, one positioned on an axially-inward side of the carcass layer (21) and the other positioned on an axially-outward side of the carcass layer (21).

11. The pneumatic tire (10) of claim 1, wherein each one of the pair of bead section shear layers (31, 32) has one bead shear layer positioned on an axially-inward side of the carcass layer (21).

12. The pneumatic tire (10) of claim 1, wherein each one of the pair of bead section shear layers (31, 32) have two bead shear layers, one positioned adjacent to an axially-inward side of the carcass layer (21) and the other positioned adjacent to an axially-outward side of the carcass layer (21).

13. The pneumatic tire (10) of claim 1, wherein a thickness of each shear layer adjacent to a side of the carcass layer (21) is between 0.1 mm and 3 mm.

14. The pneumatic tire (10) of claim 13, wherein the thickness is between 0.3 mm and 1 mm.

15. The pneumatic tire (10) of claim 5, wherein the distance d is at least 10 mm.

16. The pneumatic tire (10) of claim 1, wherein the shoulder section shear layers (33, 34) extend from the axial edge of the crown ply towards the bead section for a distance that is at least 20 mm.

17. The pneumatic tire (10) of claim 7, wherein the height h is no more than 15 mm.

18. The pneumatic tire (10) of claim 7, wherein the bead section shear layers (31, 32) extend towards the sidewall to a point that is at least 30 mm from the center of the bead core (17).

19. The pneumatic tire (10) of claim 1, wherein the elastomeric fabric comprises spandex fibers woven with nylon fibers in a tricot construction.

20. The pneumatic tire (10) of claim 19, wherein fabric comprises between 18 % and 25 % spandex fibers, the remaining being nylon fibers.

## Patentansprüche

1. Luftreifen (10), welcher umfasst:
eine Lauffläche (11), die von einer Krone (12) getragen wird, wobei die Krone (12) radial innerhalb der Lauffläche (11) positioniert ist;
ein Paar Seitenwände (14), wobei sich jede Seitenwand (14) von einem axialen Rand der Krone (12) aus radial nach innen erstreckt, wobei jede Seitenwand (14) eine Seite des Reifens (10) definiert;
ein Paar Wülste (16), wobei jeder Wulst (16) einen in Umfangsrichtung nicht dehnbaren Wulstkern (17) aufweist, der eine Wulstkernmitte definiert, wobei jeder Wulst (16) radial innerhalb jeweils einer Seitenwand (14) positioniert ist;
eine Karkassenschicht (21), die aus mehreren radial ausgerichteten Karkassenschichtkords aufgebaut ist, die in eine Elastomermatrix eingebettet sind, und sich durch die Krone (12) hindurch und zwischen den Wülsten (16) erstreckt, wobei die Karkassenschicht (21) ein Paar Karkassenschichtenden (22) aufweist, wobei jedes Ende in jeweils einem Wulst (16) verankert ist;
eine oder mehrere Zenitlagen, die radial innerhalb der Lauffläche und radial außerhalb der Karkassenschicht (21) angeordnet sind und sich zwischen den Seitenwänden des Reifens (10) erstrecken;
ein Paar Schulterabschnitts-Scherschichten (33, 34), wobei an jeder Seitenwand (14) jeweils eine Schicht des Paares angeordnet ist und jede Schicht auf mindestens einer axialen Seite der Karkassenschicht (21) angeordnet ist, wobei sich die Schulterabschnitts-Scherschichten (33) von der Seitenwand (14) in Richtung der Krone (12) erstrecken;
ein Paar Wulstabschnitts-Scherschichten (31, 32), wobei an jeder Seitenwand (14) jeweils eine Schicht des Paares angeordnet ist und jede Schicht auf mindestens einer axialen Seite der Karkassenschicht (21) angeordnet ist, wobei sich die Wulstabschnitts-Scherschichten (31, 33) von der Seitenwand (14) in Richtung des Wulstkerns (17) erstrecken;
**dadurch gekennzeichnet, dass** eine oder mehrere der Scherschichten der Paare von Schulterabschnitts- (18) und Wulstabschnitts- (19) Scherschichten von einem elastomeren Gewebe gebildet werden, das in das Gewebe eingewebte Elastomerfasern aufweist, und
wobei die Schulterabschnitts-Scherschichten (33, 34) und die Wulstabschnitts-Scherschichten (31, 32) in einem Quetschungsstoß-Bereich des Reifens quer über ein Inneres des Reifens einander gegenüberliegen, wobei der Quetschungsstoß-Bereich der Abschnitt des Reifens ist, wo der Schulterabschnitt des Reifens mit dem Wulstabschnitt des Reifens (10) in Kontakt oder beinahe in Kontakt kommt.

2. Luftreifen (10) nach Anspruch 1, wobei die Elastomerfasern aus Elastan bestehen.

3. Luftreifen (10) nach Anspruch 1, wobei das Elastomergewebe Elastanfasern umfasst, welche mit Nylonfasern in einer Strickkonstruktion verwebt sind.

4. Luftreifen (10) nach Anspruch 3, wobei das Gewebe zwischen 18 % und 25 % Elastanfasern umfasst, wobei der Rest Nylonfasern sind.

5. Luftreifen (10) nach Anspruch 1, wobei sich die Schulterabschnitts-Scherschichten (33, 34) von der Seitenwand (14) über einen vorbestimmten Abstand d von einem axialen Rand der Zenitlage bis zu einer Position radial innerhalb der Zenitlage erstrecken.

6. Luftreifen (10) nach Anspruch 5, wobei der Abstand d mindestens 5 mm beträgt.

7. Luftreifen (10) nach Anspruch 1, wobei sich die Wulstabschnitts-Scherschichten (31, 32) in einer zu einer axialen Richtung des Reifens (10) senkrechten Richtung bis zu einer Position erstrecken, die sich in einem vorbestimmten Abstand h vom Mittelpunkt des Wulstkerns (17) befindet.

8. Luftreifen (10) nach Anspruch 7, wobei die Höhe h nicht mehr als 10 mm beträgt.

9. Luftreifen (10) nach Anspruch 1, wobei jede von dem Paar von Schulterabschnitts-Scherschichten (33, 34) eine Schulterscherschicht aufweist, die auf einer axial inneren Seite der Karkassenschicht (21) positioniert ist.

10. Luftreifen (10) nach Anspruch 1, wobei jede von dem Paar von Schulterabschnitts-Scherschichten (33, 34) zwei Schulterscherschichten aufweist, von denen eine auf einer axial inneren Seite der Karkassenschicht (21) positioniert ist und die andere auf einer axial äußeren Seite der Karkassenschicht (21) positioniert ist.

11. Luftreifen (10) nach Anspruch 1, wobei jede von dem Paar von Wulstabschnitts-Scherschichten (31, 32) eine Wulstscherschicht aufweist, die auf einer axial inneren Seite der Karkassenschicht (21) positioniert ist.

12. Luftreifen (10) nach Anspruch 1, wobei jede von dem Paar von Wulstabschnitts-Scherschichten (31, 32) zwei Wulstscherschichten aufweist, von denen eine einer axial inneren Seite der Karkassenschicht (21) benachbart positioniert ist und die andere auf einer axial äußeren Seite der Karkassenschicht (21) benachbart positioniert ist.

13. Luftreifen (10) nach Anspruch 1, wobei eine Dicke jeder Scherschicht, die einer Seite der Karkassenschicht (21) benachbart ist, zwischen 0,1 mm und 3 mm beträgt.

14. Luftreifen (10) nach Anspruch 13, wobei die Dicke zwischen 0,3 mm und 1 mm beträgt.

15. Luftreifen (10) nach Anspruch 5, wobei der Abstand d mindestens 10 mm beträgt.

16. Luftreifen (10) nach Anspruch 1, wobei sich die Schulterabschnitts-Scherschichten (33, 34) von dem axialen Rand der Zenitlage über einen Abstand, welcher mindestens 20 mm beträgt, in Richtung des Wulstabschnitts erstrecken.

17. Luftreifen (10) nach Anspruch 7, wobei die Höhe h nicht mehr als 15 mm beträgt.

18. Luftreifen (10) nach Anspruch 7, wobei sich die Wulstabschnitts-Scherschichten (31, 32) in Richtung der Seitenwand bis zu einem Punkt erstrecken, welcher mindestens 30 mm vom Mittelpunkt des Wulstkerns (17) entfernt ist.

19. Luftreifen (10) nach Anspruch 1, wobei das Elastomergewebe Elastanfasern umfasst, welche mit Nylonfasern in einer Strickkonstruktion verwebt sind.

20. Luftreifen (10) nach Anspruch 19, wobei das Gewebe zwischen 18 % und 25 % Elastanfasern umfasst, wobei der Rest Nylonfasern sind.

## Revendications

1. Pneumatique (10) comprenant :
une bande de roulement (11) supportée par un sommet (12), le sommet (12) étant positionné radialement à l'intérieur de la bande de roulement (11) ;
une paire de flancs (14), chaque flanc (14) s'étendant radialement vers l'intérieur depuis un bord axial du sommet (12), chaque flanc (14) définissant un côté du pneu (10) ;
une paire de talons (16), chaque talon (16) comportant une tringle circonférentiellement inextensible (17) définissant un centre de tringle, chaque talon (16) étant positionné radialement à l'intérieur de chaque flanc (14) respectif ;
une couche de carcasse (21) construite à partir d'une pluralité de câbles de couche de carcasse orientés radialement, noyés dans une matrice élastomère et s'étendant à travers le sommet (12) et entre les talons (16), la couche de carcasse (21) ayant une paire d'extrémités de couche de carcasse (22), chaque extrémité étant ancrée respectivement dans chaque talon (16) ;
une ou plusieurs nappes de sommet disposées radialement à l'intérieur de la bande de roulement et radialement à l'extérieur de la couche de carcasse (21) et s'étendant entre les flancs du pneumatique (10) ;
une paire de couches de cisaillement de section d'épaulement (33, 34), l'une des couches étant située respectivement au niveau de chaque flanc (14) et chacune positionnée sur au moins un côté axial de la couche de carcasse (21), les couches de cisaillement de section d'épaulement (33) s'étendant du flanc (14) vers le sommet (12) ;
une paire de couches de cisaillement de section de talon (31, 32), l'une de ces couches étant située respectivement au niveau de chaque flanc (14) et chacune étant positionnée sur au moins un côté axial de la couche de carcasse (21), les couches de cisaillement de section de talon (31, 33) s'étendant du flanc (14) vers la tringle (17) ;
**caractérisé en ce que** l'une ou plusieurs des paires de couches de cisaillement de section d'épaulement (18) et de section de talon (19) sont constituées d'une toile élastomère comportant des fibres élastomères tissées dans la toile, et
dans lequel les couches de cisaillement de section d'épaulement (33, 34) et les couches de cisaillement de section de talon (31, 32) dans une région de pincement du pneumatique sont opposées l'une à l'autre de part et d'autre d'une partie intérieure du pneumatique, la région de pincement étant la section du pneumatique où la section d'épaulement du pneumatique est en contact ou est presque en contact avec la section de talon du pneumatique (10).

2. Pneumatique (10) selon la revendication 1, dans lequel les fibres élastomères sont en élasthanne.

3. Pneumatique (10) selon la revendication 1, dans lequel la toile élastomère comprend des fibres d'élasthanne tissées avec des fibres de nylon dans une structure de tricot.

4. Pneumatique (10) selon la revendication 3, dans lequel la toile comprend entre 18 % et 25 % de fibres d'élasthanne, le reste étant des fibres de nylon.

5. Pneumatique (10) selon la revendication 1, dans lequel les couches de cisaillement de section d'épaulement (33, 34) s'étendent du flanc (14) jusqu'à une position radialement à l'intérieur de la nappe de sommet sur une distance prédéterminée d depuis un bord axial de la nappe de sommet.

6. Pneumatique (10) selon la revendication 5, dans lequel la distance d vaut au moins 5 mm.

7. Pneumatique (10) selon la revendication 1, dans lequel les couches de cisaillement de section de talon (31, 32) s'étendent jusqu'à une position située à une distance prédéterminée h du centre de la tringle (17) dans une direction perpendiculaire à une direction axiale du pneumatique (10).

8. Pneumatique (10) selon la revendication 7, dans lequel la hauteur h ne dépasse pas 10 mm.

9. Pneumatique (10) selon la revendication 1, dans lequel chacune des paires de couches de cisaillement de section d'épaulement (33, 34) a une couche de cisaillement d'épaulement positionnée sur une face axialement intérieure de la couche de carcasse (21).

10. Pneumatique (10) selon la revendication 1, dans lequel chacune des paires de couches de cisaillement de section d'épaulement (33, 34) a deux couches de cisaillement d'épaulement, une positionnée sur une face axialement intérieure de la couche de carcasse (21) et l'autre positionnée sur une face axialement extérieure de la couche de carcasse (21).

11. Pneumatique (10) selon la revendication 1, dans lequel chacune des paires de couches de cisaillement de section de talon (31, 32) a une couche de cisaillement de talon positionnée sur une face axialement intérieure de la couche de carcasse (21).

12. Pneumatique (10) selon la revendication 1, dans lequel chacune des paires de couches de cisaillement de section de talon (31, 32) a deux couches de cisaillement de talon, une en position adjacente à une face axialement intérieure de la couche de carcasse (21) et l'autre en position adjacente à une face axialement extérieure de la couche de carcasse (21).

13. Pneumatique (10) selon la revendication 1, dans lequel une épaisseur de chaque couche de cisaillement adjacente à une face de la couche de carcasse (21) est comprise entre 0,1 mm et 3 mm.

14. Pneumatique (10) selon la revendication 13, dans lequel l'épaisseur est comprise entre 0,3 mm et 1 mm.

15. Pneumatique (10) selon la revendication 5, dans lequel la distance d vaut au moins 10 mm.

16. Pneumatique (10) selon la revendication 1, dans lequel les couches de cisaillement de section d'épaulement (33, 34) s'étendent du bord axial de la nappe de sommet vers la section de talon sur une distance qui est au moins égale à 20 mm.

17. Pneumatique (10) selon la revendication 7, dans lequel la hauteur h ne dépasse pas 15 mm.

18. Pneumatique (10) selon la revendication 7, dans lequel les couches de cisaillement de section de talon (31, 32) s'étendent vers le flanc jusqu'à un point qui est à au moins 30 mm du centre de la tringle (17).

19. Pneumatique (10) selon la revendication 1, dans lequel la toile élastomère comprend des fibres d'élasthanne tissées avec des fibres de nylon dans une structure de tricot.

20. Pneumatique (10) selon la revendication 19, dans lequel la toile comprend entre 18 % et 25 % de fibres d'élasthanne, le reste étant des fibres de nylon.
